# FASCICULE DE BREVET EUROPEEN

(11) **EP 3 890 163 B1**
(45) Date de publication et mention de la délivrance du brevet: **04.11.2026**
(21) Numéro de dépôt: 20315095.8
(22) Date de dépôt: 01.04.2020
(51) Int. Cl.: H02K 1/28, H02K 15/023, H02K 17/16

(54) **PROCEDE DE DIMENSIONNEMENT D'UN ROTOR A ARBRE NON TRAVERSANT, ROTOR ET MOTOCOMPRESSEUR ASSOCIES**
DIMENSIONIERUNGSVERFAHREN EINES ROTORS MIT NICHT DURCHGEHENDER WELLE, ENTSPRECHENDER ROTOR UND ENTSPRECHENDES KOMPRESSORAGGREGAT
METHOD FOR SIZING OF A ROTOR WITH NON-THROUGH SHAFT, ASSOCIATED ROTOR AND MOTORCOMPRESSOR

(43) Date de publication de la demande: 06.10.2021
(73) Titulaire: GE Energy Power Conversion Technology Ltd, Rugby, Warwickshire CV21 1BD (GB)
(72) Inventeur: Durantay, Lionel, 54390 Frouard (FR); Biri, Clément, 54250 Champigneulles (FR); Galmiche, Christophe, 54200 Toul (FR)
(74) Mandataire: Casalonga

(56) Documents cités:
- EP-A1- 3 121 449
- EP-A1- 3 627 659
- US-A- 2 421 860
- US-A1- 2014 227 079
- US-B1- 6 177 750

## Description

La présente invention concerne les systèmes mécaniques comprenant un rotor sans arbre traversant. Tels systèmes sont par exemple décrits en US 2014/227079A1, EP 3 627 659 A1, US 6,177,750 B1 ou US 2,421,860.

La présente invention concerne également un motocompresseur comprenant un tel rotor.

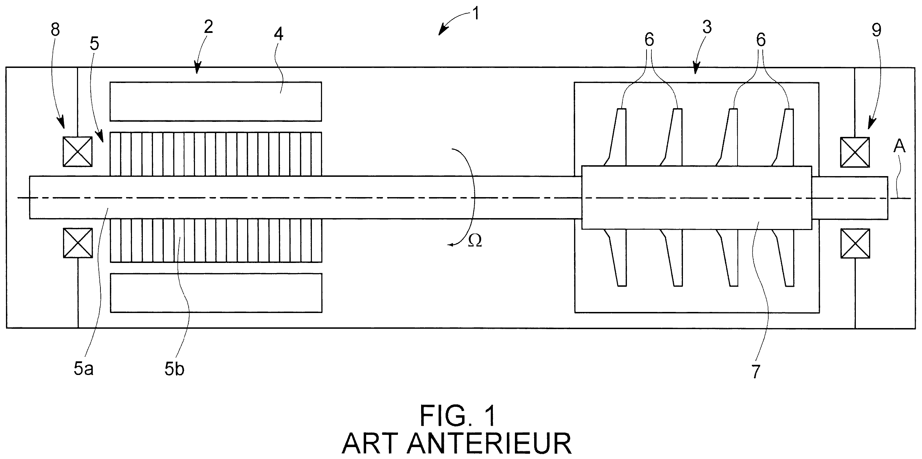

La figure 1 illustre un exemple de motocompresseur 1 selon l'état de la technique comportant une machine électrique tournante 2 reliée à une section de compression 3.

La machine électrique tournante 2 comprend un stator 4 dans lequel est inséré un rotor 5 à arbre traversant comportant un arbre 5a traversant des tôles magnétiques 5b et entraînant 1a section de compression 3 à une vitesse de rotation Ω.

La section de compression 3 comprend des roues 6 de compression montées sur un arbre 7 de la section 3.

L'arbre 7 de la section 3 est relié à l'arbre 5a du rotor 5.

Des paliers 8 et 9 maintiennent en rotation l'arbre rotorique 5a et l'arbre 7 de la section 3 selon un axe A.

Les paliers 8 et 9 comprennent par exemple des paliers magnétiques ou des paliers à fluide tels que des paliers à huile, à eau ou à gaz.

Un fluide est généralement injecté dans l'enveloppe du motocompresseur pour notamment refroidir la machine électrique tournante 2, par exemple un gaz ou un liquide.

En variante, l'enveloppe du motocompresseur 1 est vide.

Les paliers 8 et 9 comportent de préférence des paliers magnétiques ayant généralement une fréquence de coupure de contrôle de 5.5 KHz.

Généralement, en fonctionnement, la vitesse de rotation de l'arbre rotorique 5a est déterminée de sorte que la ligne de transmission, comprenant le rotor 5 et l'arbre 7, ne traverse par le premier mode de flexion de précession directe, la ligne de transmission ne fonctionnant pas dans un domaine de vitesse hypercritique.

Un fonctionnement de la ligne de transmission dans un domaine de vitesse hypercritique entraîne une perte de stabilité du système en rotation comprenant le moteur 2 et la section de compression 3 pouvant aboutir à leur destruction.

La ligne d'arbre de transmission hypercritique comprend plusieurs fréquences de résonance en flexion (modes propres) entre le premier mode propre de flexion de précession directe et la fréquence de coupure de contrôle des paliers magnétiques 8 et 9 pouvant déformer dynamiquement la masse magnétique, le contrôle des paliers magnétiques 8 et 9 excitant lesdits modes propres.

Cette perte de stabilité est générée par l'apparition de méta amortissements (« meta-damping ») apparaissant de manière prépondérante dans les tôles 5b du rotor 5 feuilleté lorsque la ligne de transmission dépasse la vitesse critique.

Le rendement global du motocompresseur 1 est notamment fonction de la vitesse de rotation de l'arbre 7.

Cette limitation du domaine des vitesses utilisables dégrade le rendement du motocompresseur 1.

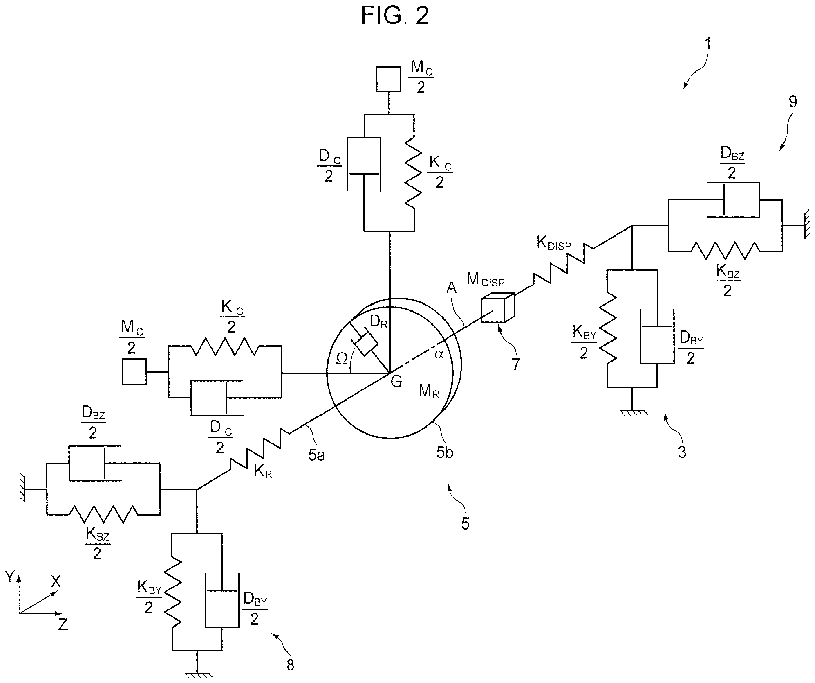

La figure 2 illustre un modèle dynamique schématique de la ligne de transmission du motocompresseur 1 dans un repère fixe (X, Y, Z).

Le rotor 5 est représenté par sa masse M_{R}, sa raideur K_{R}, son amortissement interne D_{R}, un coefficient α représentant les effets gyroscopiques s'appliquant sur l'arbre 5a et proportionnel au moment d'inertie polaire du rotor 5, et son centre de gravité G.

Le fluide injecté dans l'enveloppe du motocompresseur 1 est modélisé par une masse M_{C}, un coefficient d'amortissement D_{C} et une raideur K_{C}.

Le rotor de la section de compression 3 comprenant l'arbre 7 et les roues 6 est représenté par sa raideur K_{DISP} et sa masse M_{DISP}.

Les forces de pression s'exerçant sur les roues 6 sont négligées, la section de compression étant conçue pour les minimiser.

Les paliers 8 et 9 sont représentés par des coefficients de raideur K_{BY} selon l'axe Y et K_{BZ} selon l'axe Z, et des coefficients d'amortissement D_{BY} selon l'axe Y et D_{BZ} selon l'axe Z.

Soit M_{L} la masse de l'ensemble de la ligne de transmission égale à la somme de la masse M_{R} et de la masse M_{DISP}, et K_{L} la raideur de la ligne de transmission égale à 1a somme de la raideur K_{R} et de la raideur K_{DISP}.

Selon les équations générales de la mécanique, la vitesse d'instabilité Ω_{INST} de la ligne de transmission est : ${Ω}_{INST} = {\left\{\frac{{K}_{Y} + {K}_{Z}}{2 . \left({M}_{L}+{M}_{C}-α\right)}.{\left(1+\frac{{D}_{C} + \frac{{D}_{BY} + {D}_{BZ}}{2}}{{D}_{R}}\right)}^{2}+\frac{{\left({K}_{Y}-{K}_{Z}\right)}^{2}}{4 . {D}_{R}^{2}}\right\}}^{1 / 2}$ (1) où ${K}_{Y} = \frac{1}{\frac{1}{{K}_{BY}} + \frac{1}{{K}_{L}} + \frac{1}{{K}_{C}}}$ (2) et ${K}_{Z} = \frac{1}{\frac{1}{{K}_{BZ}} + \frac{1}{{K}_{L}} + \frac{1}{{K}_{C}}}$ (3)

Pour augmenter la vitesse d'instabilité Ω_{INST}, une première solution consiste à modifier les paliers 8 et 9 de manière à augmenter les raideurs K_{BY} et K_{BZ} et/ou augmenter les amortissements D_{BY} et D_{BZ}.

Cependant, les caractéristiques des paliers sont difficilement modifiables, notamment dans le cas de paliers magnétiques ayant des raideurs K_{BY} et K_{BZ} identiques très faibles par rapport à la raideur K_{L}, et des amortissements D_{BY} et D_{BZ} égaux.

Une deuxième solution pour augmenter la vitesse d'instabilité Ω_{INST} consiste à augmenter la raideur K_{L} de la ligne de transmission ou à diminuer la masse M_{L} la ligne de transmission.

Cependant, la ligne de transmission est dimensionnée pour transmettre une puissance mécanique suffisante entre la machine électrique 2 et la section de compression 3, la modification d'au moins une caractéristique de la ligne de transmission pouvant entraîner la détérioration de celle-ci.

Une troisième solution pour augmenter la vitesse d'instabilité Ω_{INST} consiste à agir sur l'amortissement interne D_{R} du rotor 5 dépendant de la vitesse de rotation du rotor 5, en minimisant l'amortissement interne D_{R}, c'est-à-dire en repoussant le domaine de fréquences d'apparition des méta amortissements.

Le document US2013/0025961 divulgue qu'une structure comprenant un arrangement périodique de cellules formant la structure, peut augmenter des méta amortissements dans une plage de fréquences prédéterminée.

De plus, comme la machine électrique tournante 2 comprend le rotor 5 à arbre traversant 5a, la vitesse périphérique du rotor est limitée à 200 m/s afin de limiter la concentration de contraintes dans les tôles magnétiques 5b générées sous l'effet de la force centrifuge et susceptible d'endommager le rotor. Cette limitation de la vitesse de rotation dégrade le rendement et le rapport de compression du motocompresseur 1.

Il est donc proposé de pallier tout ou partie des inconvénients des systèmes mécaniques entraînés par une machine électrique tournante selon l'état de la technique, notamment en dimensionnant le rotor de sorte que la machine électrique tournante tourne à une fréquence de rotation supérieure à la fréquence de rotation hypercritique de la ligne de transmission tout en étant stable.

Au vu de ce qui précède, il est proposé un rotor pour machine électrique, le rotor comportant un arbre non traversant destiné à entraîner une ligne de transmission et comprenant deux demi-arbres enserrant une masse magnétique cylindrique formant l'arbre non traversant, la ligne de transmission étant formée par le rotor et un arbre de transmission d'une section de compression relié à l'arbre non traversant, la masse magnétique comprenant au moins deux cellules identiques adjacentes, chaque cellule comportant au moins un élément circulaire réalisée en un matériau, caractérisé par un module de Young et une masse volumique, les éléments circulaires comportant chacun une tôle ayant le module de Young, la masse volumique, une épaisseur et un diamètre prédéterminé.

L'épaisseur de l'élément circulaire est déterminée à partir du diamètre prédéterminé, du module de Young et de la masse volumique du matériau pour minimiser la propagation de méta amortissement dans le rotor sur une plage de fréquence d'excitation de la ligne de transmission comprise entre 0 et 5.5 KHZ en plaçant la plage de fréquences de méta-amortissement de la masse magnétique du rotor au-delà de 5.5kHz de sorte que les modes propres de la ligne de transmission ne soient pas excités par le contrôle de paliers magnétiques maintenant le rotor et l'arbre de transmission. L'épaisseur de l'élément circulaire est déterminée en :
- calculant un coefficient d'amortissement homogénéisé de Rayleigh représentant l'amortissement du rotor en faisant varié la pulsation entre 0 rad/s et 34557 rad/s pour différentes valeurs de l'épaisseur, du diamètre extérieur, du module de Young et de la masse volumique,
- obtenant une courbe représentant le coefficient d'amortissement homogénéisé de Rayleigh en fonction de la valeur du diamètre et de l'épaisseur, la courbe ayant une zone au-dessus de la courbe et une zone en dessous de la courbe, les couples de valeurs de diamètre et d'épaisseur situées dans la zone au-dessus de la courbe engendrent des méta amortissements dans le rotor pour des fréquences inférieures à 5.5 KHz, et les couples de valeurs de diamètre et d'épaisseur situées dans la zone sous la courbe engendrent dans le rotor des méta amortissements dont les amplitudes ne sont pas susceptibles d'entraîner une instabilité du rotor pour des fréquences supérieures à 5.5 KHz,
- déterminant la valeur de l'épaisseur de l'élément circulaire de sorte que le couple de valeur d'épaisseur et de diamètre prédéterminée soit dans la zone sous la courbe,
- la plage de fréquences de rotation de la ligne de transmission étant toutes les fréquences de rotation supérieures ou égales à la première fréquence de résonance de flexion en précession directe de la ligne de transmission et s'étend entre 0 et 500 Hz.

Selon une caractéristique, chaque cellule comporte au moins un élément circulaire.

De préférence, les deux éléments circulaires comprennent un diamètre extérieur identique ou différent.

Selon une autre caractéristique, les deux éléments circulaires sont en un matériau identique ou chaque tôle étant en un matériau différent.

Avantageusement, chaque élément circulaire est réalisé en acier magnétique, en cuivre ou en matière plastique.

Selon encore une autre caractéristique, le rotor comprend en outre deux disques de court-circuit et des barres conductrices logées dans les éléments circulaires pour former une cage d'écureuil.

Il est proposé selon un autre aspect, une machine électrique tournante comprenant le rotor tel que défini précédemment.

De préférence, la machine électrique tournante est du type asynchrone à cage d'écureuil.

Il est proposé selon encore un autre aspect, un système mécanique comprenant la machine électrique tournante telle que définie précédemment et un dispositif mécanique comprenant un arbre de transmission, l'arbre de transmission étant relié à l'un des demi-arbres rotoriques.

Il est proposé selon un autre aspect, un motocompresseur comprenant au moins une section de compression, et la machine électrique tournante telle que définie précédemment et entraînant ladite section de compression.

Il est proposé selon encore un autre aspect, un procédé de dimensionnement d'un rotor à arbre non traversant pour machine électrique entraînant une ligne de transmission.

Le rotor comprend deux demi-arbres formant l'arbre traversant et enserrant une masse magnétique cylindrique comprenant au moins deux cellules identiques adjacentes, la ligne de transmission étant formée par le rotor et un arbre de transmission d'une section de

compression relié à l'arbre non traversant, chaque cellule comportant au moins un élément circulaire réalisée en un matériau caractérisé par un module de Young et une masse volumique, les éléments circulaires comportant chacun une tôle ayant le module de Young, la masse volumique, une épaisseur et un diamètre prédéterminé.

Le procédé comprend un dimensionnement de l'épaisseur de l'élément circulaire à partir du diamètre prédéterminé, du module de Young et de la masse volumique du matériau de manière à minimiser la propagation de méta amortissement dans le rotor sur une plage de fréquences d'excitation de la ligne de transmission comprise entre 0 et 5.5 KHZ en plaçant la plage de fréquences de méta-amortissement de la masse magnétique du rotor au-delà de 5.5kHz de sorte que les modes propres de la ligne de transmission ne pas excités par le contrôle de paliers magnétiques maintenant le rotor et l'arbre de transmission, le procédé comprenant :
- un calcule d'un coefficient d'amortissement homogénéisé de Rayleigh représentant l'amortissement du rotor en faisant varié la pulsation entre 0 rad/s et 34557 rad/s pour différentes valeurs de l'épaisseur, du diamètre extérieur, du module de Young et de la masse volumique,
- une obtention d'une courbe représentant le coefficient d'amortissement homogénéisé de Rayleigh en fonction de la valeur du diamètre et de l'épaisseur, la courbe ayant une zone au-dessus de la courbe et une zone en dessous de la courbe, les couples de valeurs de diamètre et d'épaisseur situées dans la zone au-dessus de la courbe engendrent des méta amortissements dans le rotor pour des fréquences inférieures à 5.5 KHz, et les couples de valeurs de diamètre et d'épaisseur situées dans la zone sous la courbe engendrent dans le rotor des méta amortissements dont les amplitudes ne sont pas susceptibles d'entraîner une instabilité du rotor pour des fréquences supérieures à 5.5 KHz,
- une détermination de la valeur de l'épaisseur inférieure de sorte que le couple de valeur d'épaisseur et de diamètre prédéterminée soit dans la zone sous la courbe,
- la plage de fréquence de rotation de la ligne de transmission étant toutes les fréquences de rotation supérieures ou égales à la première fréquence de résonance de flexion en précession directe de la ligne de transmission et s'étend entre 0 et 500 Hz. De préférence, le dimensionnement de la cellule comportant au moins un élément circulaire est réalisé de manière analytique en mettant en œuvre un modèle de poutre.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent un motocompresseur selon l'état de la technique ;
- la figure 3 illustre un mode de réalisation d'un motocompresseur ;
- la figure 4 illustre un exemple de cellule ; et
- la figure 5 représente un exemple de courbe représentant le coefficient d'amortissement homogénéisé de Rayleigh.

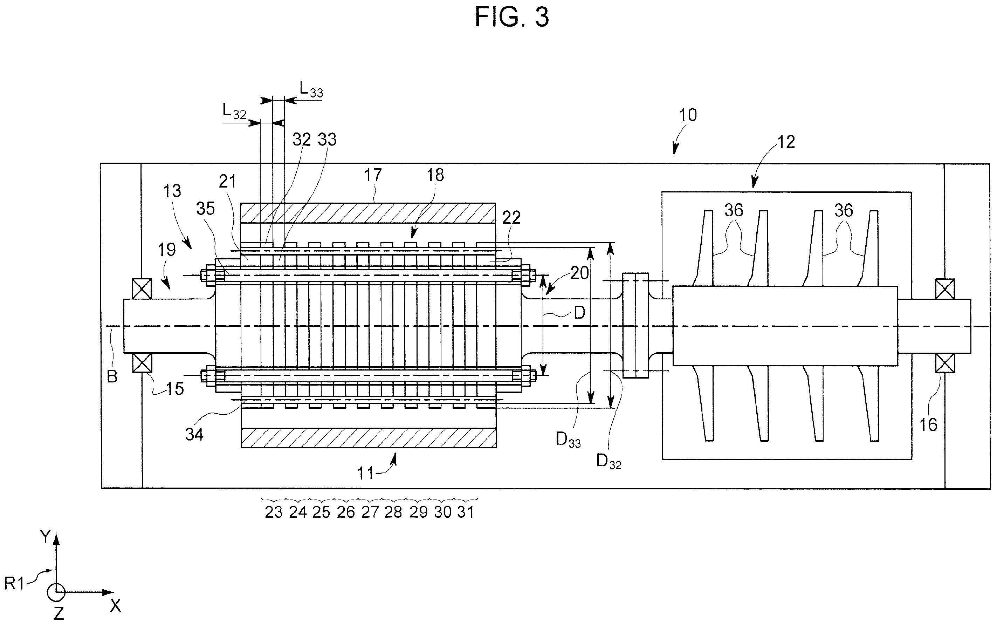

On se réfère à la figure 3 qui illustre une coupe selon un direction axiale d'un exemple de mode de réalisation d'un motocompresseur 10 comprenant une machine électrique tournante 11 reliée à une section de compression 12.

La machine électrique tournante 11 comprend un rotor 13 comprenant un arbre non traversant d'axe central B relié à un arbre de transmission 14 de la section de compression 12.

Le rotor 13 et l'arbre de transmission 14 forment une ligne de transmission.

On suppose dans ce qui suit que la fréquence de rotation de la ligne de transmission est située dans le domaine des fréquences hypercritiques de fonctionnement du motocompresseur 1 et est inférieure à 500 Hz, le domaine des fréquences hypercritiques de la ligne de transmission hypercritique étant toutes les fréquences de rotation supérieures ou égales à 1a première fréquence de résonance de flexion en précession directe de la ligne de transmission.

Le diamètre de l'arbre de transmission 14 est dimensionné selon la valeur d'un couple à transmettre.

Le rotor 13 et l'arbre de transmission 14 sont maintenus en rotation par deux paliers 15 et 16 situés respectivement à l'extrémité libre du rotor 13 et de l'arbre de transmission 14.

Les paliers 15 et 16 sont par exemple des paliers sur film d'huile, sur film de gaz, à sustentation magnétique ou des paliers à fluide.

Généralement, les paliers 15 et 16 comprennent des paliers magnétiques.

Le rotor 13 est inséré dans un stator 17 de la machine électrique tournante 11 du type asynchrone à cage d'écureuil.

En variante, la machine électrique tournante 11 peut être une machine du type asynchrone à rotor bobiné ou du type synchrone, à rotor bobiné ou à aimants permanents.

Le rotor 13 à arbre non traversant comprend une masse magnétique 18 cylindrique enserrée entre un premier 19 et un deuxième 20 demi-arbres par l'intermédiaire de deux disques de court-circuit 21 et 22, une extrémité de l'arbre de transmission 14 étant reliée au deuxième demi-arbre 20.

La masse magnétique 18 comprend des cellules identiques adjacentes 23 à 31, chacune des cellules ayant une longueur totale L.

La masse magnétique 18 comprend une répétition périodique de cellules 23 à 31.

En variante, la masse magnétique 18 peut comprendre une répétition apériodique de cellules 23 à 31.

Les cellules 23 à 31 sont configurées pour empêcher la propagation de méta-amortissement dans le rotor 13 sur une plage de fréquences d'excitation de la ligne de transmission.

La plage de fréquence d'excitation est par exemple comprise entre 0 et 5.5 KHz.

En plaçant la plage de fréquences de méta-amortissement de la masse magnétique 18 du rotor 13 au-delà de 5.5kHz, les modes propres de la ligne de transmission ne sont pas excités par le contrôle des paliers magnétiques 15 et 16.

Chaque cellule 23 à 31 comprend deux éléments circulaires 32 et 33 respectivement de diamètres extérieurs différents D32 et D33 et respectivement d'épaisseurs L32 et L33 différentes.

Les éléments circulaires 32 et 33 sont réalisées en un matériau différent, la première tôle 32 étant réalisée en un premier matériau caractérisé par un module de Young E₃₂ et une masse volumique *ρ*₃₂, et la deuxième tôle 33 étant réalisée en un deuxième matériau caractérisé par un module de Young E₃₃ et une masse volumique *ρ*₃₃.

Bien entendu, chaque cellule 23 à 31 peut comprendre plus de deux éléments circulaires.

Les éléments circulaires sont par exemple réalisés en acier magnétique pour former des tôles magnétiques, en cuivre, en matière non métallique ou en matière plastique.

En outre, les éléments circulaires adjacents peuvent être séparés l'un de l'autre par du verni, une résine, un isolant électrique, une couche de peinture, un dépôt de céramique ou tout polymère.

Les éléments circulaires 32 et 33 formant des tôles magnétiques adjacentes peuvent être séparés par un isolant électrique.

En variante, les diamètres extérieurs D32 et D33 peuvent être identiques.

Selon une autre variante, les épaisseurs L32 et L33 peuvent être identiques.

Selon encore une autre variante, les premier et deuxième matériaux peuvent être identiques.

Selon un autre mode de réalisation, chaque cellule 23 à 31 peut comprendre un empilement de plaques métalliques, l'épaisseur des plaques métalliques étant de préférence supérieure à 5% du diamètre extérieur de la masse magnétique 18.

Des barres conductrices 34 sont logées dans les éléments circulaires 32 et 33 et les disques de court-circuit 21 et 22 de sorte les disques de court-circuit 21 et 22 et les barres conductrices 34 forment une cage d'écureuil.

Des tirants 35 sont répartis uniformément sur un diamètre D de la masse magnétique 18 de manière à maintenir les éléments circulaires 32, 33 compactés entre les demi-arbres 19 et 20.

La section de compression 12 comprend des roues 36 de compression montées sur l'arbre de transmission 14 de sorte que le rotor 13 entraîne en rotation les roues 36 pour comprimer un gaz ou un fluide.

Comme le rotor 13 est à arbre non traversant, la vitesse périphérique du rotor 13 n'est pas limitée à 200 m/s, permettant d'améliorer le rendement de la machine électrique tournante 11. Plus la vitesse de rotation du rotor 13 est élevée, plus la puissance développée par la machine électrique tournante 11 est importante.

Plus précisément, le motocompresseur 10 peut tourner à une fréquence de rotation hypercritique.

On définit un repère R1(X, Y, Z) direct comprenant un axe X confondu avec l'axe de rotation du rotor 13.

Le calcul de l'amortissement D_{R13} du rotor 13 est détaillé dans ce qui suit.

Le rotor 13 est modélisé par une poutre de longueur L s'étendant selon l'axe. X dans le repère XYZ, de section A.

Comme la fréquence de rotation du rotor 13 est inférieure à 500 Hz, il est admis que les déformations de la section droite de la poutre dues au cisaillement sont négligées et que l'effet d'inertie de rotation est négligé.

Le comportement en flexion de la poutre selon le temps t et la position x dans la poutre selon l'axe X lorsqu'aucune force n'est appliquée sur le rotor 13 est régis par : $E \left(x\right) I \left(x\right) \frac{{\partial }^{4} y \left(x, t\right)}{\partial {x}^{4}} + ρ \left(x\right) A \left(x\right) \frac{{\partial }^{2} y \left(x, t\right)}{\partial {t}^{2}} = 0$ (4) où
E(x) est le module de Young de la masse magnétique 18 égal à E₃₂ ou E₃₃ selon la valeur de x, I(x) est le moment d'inertie de la section droite selon l'axe x de la poutre, et ρ(x) est 1a masse volumique égale à *ρ*₃₂ ou *ρ*₃₃ selon la valeur de x et A(x) est la section du rotor 13 selon la valeur de x.

Puis on sépare les variables x et t en introduisant la fonction complexe : $y \left(x, t\right) = Y \left(x\right) {e}^{- jωt}$ (5)

Où *j*² = -1

On remplace le module de Young E(x) par un module de Young complexe *E̅*(x) et la masse volumique *ρ*(*x*) par une masse volumique complexe *ρ̅*(*x*) tels que : $\overline{E} \left(x\right) = E \left(x\right) \left(1-{jη}_{E}. ω\right)$ (6)
où *η_{E}* est le facteur d'amortissement du module de Young, et $\overline{ρ} \left(x\right) = ρ \left(x\right) \left(1-j\frac{{η}_{ρ}}{ω}\right)$ (7)
où *η_{ρ}* est le facteur d'amortissement de la masse volumique.

La solution de l'équation (4) est du type : ${Y}_{1} \left(x\right) = \left({A}_{1}{e}^{z 1 . x}+{B}_{1}{e}^{z 2 . x}+{C}_{1}{e}^{z 3 . x}+{D}_{1}{e}^{z 4 . x}\right) {e}^{- jωt}$ pour x étant dans la première tôle 32 (8), et ${Y}_{2} \left(x\right) = \left({A}_{2}{e}^{s 1 . x}+{B}_{2}{e}^{s 2 . x}+{C}_{2}{e}^{s 3 . x}+{D}_{2}{e}^{s 4 . x}\right) {e}^{- jωt}$ pour x étant dans la deuxième tôle 33 (9),

les coefficients z1 à z4 et s1 à s4 étant les racines de l'équation (4).

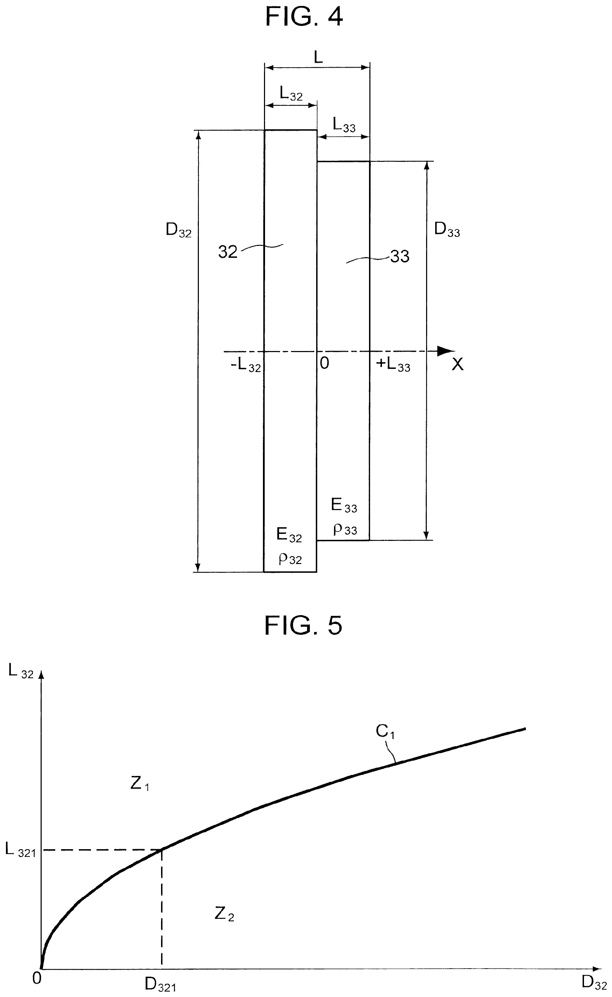

Comme la masse magnétique 18 comprend une répétition périodique de cellules 23 à 31 identiques de période L=L₃₂+L₃₃, on applique le théorème de Floquet/Bloch aux équations (8) et (9) : ${Y}_{1} \left(x\right) = \left({A}_{1}{e}^{z 1 . \left(x-L\right)}+{B}_{1}{e}^{z 2 . \left(x-L\right)}+{C}_{1}{e}^{z 3 . \left(x-L\right)}+{D}_{1}{e}^{z 4 . \left(x-L\right)}\right) {e}^{- jωt} {e}^{- \overline{k} L}$ pour x étant dans la première tôle 32 (10), et ${Y}_{2} \left(x\right) = \left({A}_{2}{e}^{s 1 . \left(x-L\right)}+{B}_{2}{e}^{s 2 . \left(x-L\right)}+{C}_{2}{e}^{s 3 . \left(x-L\right)}+{D}_{2}{e}^{s 4 . \left(x-L\right)}\right) {e}^{- jωt} {e}^{- \overline{k} L}$ pour x étant dans la deuxième tôle 33 (11),
où *k̅* est le nombre d'onde complexe de Floquet de manière à se limiter à l'une des cellule 23 à 31 représentée à la figure 4, l'équation (10) décrivant la déflexion de la masse magnétique 18 pour les valeurs de x inférieures à 0 et l'équation (11) décrivant la déflexion de la masse magnétique 18 pour les valeurs de x supérieures à 0, l'origine de l'axe X étant choisie à l'interface des première et deuxième éléments circulaires 32 et 33.

Par symétrie, les coefficients z1 et s1, z2 et s2, z3 et s3, z4 et s4 sont égaux.

En appliquant les conditions aux limites de continuité des moments et des effets de courbure, on obtient un système matriciel de huit équations comprenant les huit coefficients A₁ à D₁ et A₂ à D₂ des équations (10) et (11).

Soit M(*k̅*,ω)1a matrice contenant le système matriciel pour une valeur de pulsation ω1 de la fréquence de rotation du rotor 13.

On résout l'équation du déterminant DET de la matrice M égale à 0 de manière à déterminer les quatre valeurs complexes de *k̅* notées *k̅*1*, k̅*2*, k̅*3 et *k̅*4.

D'autre part, en utilisant l'équation (4), on obtient le nombre d'onde suivant $\overline{k} = \sqrt{ω} ⋅ {\left(\frac{{ρ}_{h} {A}_{h}}{{E}_{h} {I}_{h}}\right)}^{\frac{1}{4}} ⋅ {\left(\frac{1 - {iη}_{ρ}}{1 - {jη}_{E}}\right)}^{\frac{1}{4}}$ (12) où ${ρ}_{h} {A}_{h} = \frac{1}{L} {\int }_{0}^{L} ρ \left(x\right) A \left(x\right) dx$ (13)
*ρ*(*x*) étant égal à *ρ*₃₂ si x est compris entre -L₃₂ et 0, et à *ρ*₃₃ si x est compris entre 0 et L₃₃, et
la section A(x) étant calculée à partir du diamètre D₃₂ si x est compris entre -L₃₂ et 0, et à à partir du diamètre D₃₃ si x est compris entre 0 et L₃₃ ; $\frac{1}{{E}_{h} {I}_{h}} = \frac{1}{L} {\int }_{0}^{L} \frac{dx}{E \left(x\right) I \left(x\right)}$ (14)

*E*(*x*) étant égal à *E*₃₂ si x est compris entre -L₃₂ et 0, et à *E*₃₃ si x est compris entre 0 et L₃₃, et
le moment d'inertie I(x) étant calculé à partir du diamètre D₃₂ si x est compris entre -L₃₂ et 0, et à à partir du diamètre D₃₃ si x est compris entre 0 et L₃₃.

Soit ηₕ le coefficient d'amortissement homogénéisé de Rayleigh représentant l'amortissement du rotor 13. ${η}_{h} = \frac{{η}_{ρ}}{ω} + {η}_{E} . ω$ (15)

En utilisant les valeurs *k̅*1, *k̅*2*, k̅*3 *et k̅*4 déterminées lors de du calcul du déterminant DET de la matrice M(*k̅*,ω) pour la pulsation ω1 et l'équation (12) pour ω égale à ω1, on obtient les relations suivantes permettant de calculer le coefficient ηₕ pour la pulsation ω1 : $Re \left(\overline{k}i\right) = F 1 \left({η}_{ρ}, {η}_{E}\right)$ (16) $Im \left(\overline{k}i\right) = F 2 \left({η}_{ρ}, {η}_{E}\right)$ (17)
i variant de 1 à 4
où Re est la partie réelle de *k̅*i et Im est la partie imaginaire de *k̅*i*.*

On calcule le coefficient ηₕ la pulsation ω1 variant de 0 rad/s à 34557 rad/s (soit 5.5 KHz) pour différentes valeurs de L₃₂, L₃₃, D₃₂, D₃₃, E₃₂, E₃₃, *ρ*₃₂ et *ρ*₃₃.

Suite à une analyse variationnelle l'amplitude des méta amortissements dans le domaine de fréquence considéré est la plus faible lorsque chaque cellule 23 à) 31 comprend une unique tôle.

La figure 5 représente une courbe C1 représentant 1a valeur du diamètre D₃₂ en fonction de l'épaisseur L₃₂, chaque cellule 23 à 31 comportant uniquement la tôle 32.

Les couples de valeurs (D₃₂, L₃₂) situées dans la zone Z1 au-dessus de la courbe C1 engendrent des méta amortissements dans le rotor 13 pour des fréquences inférieures à 5.5 KHz, et les couples de valeurs (D₃₂, L₃₂) situées dans la zone Z2 sous la courbe C1, engendrent, dans: le rotor 13 des méta amortissements dont les amplitudes ne sont pas susceptibles d'entraîner une instabilité du rotor 13 pour des fréquences supérieures à 5.5 KHz.

Par exemple, un rotor 13 comprenant des cellules 23 à 31 comportant chacune une tôle ayant un module de Young E₃₂, une masse volumique *ρ*₃₂, une épaisseur L₃₂₁ et un diamètre D₃₂₁ n'est pas instable dans le domaine de fréquence allant de 0 à 5.5 KHz, si pour la valeur du diamètre D₃₂ fixée à D₃₂₁, la valeur de L₃₂ est inférieure à L321, sinon le rotor 13 est instable.

La méthode décrite précédemment permet de contrôler le comportement vibratoire du rotor 13 pour minimiser les méta amortissements dûs aux pièces en rotation pouvant générer une instabilité pour les fréquences de rotation hypercritiques et ainsi déterminer une plage de fréquences de rotation minimisant les méta amortissements.

La chaîne de transmission entraînée par le rotor 13 fonctionne dans un domaine de fréquences de rotation hypercritiques sans présenter de risque d'instabilité.

Un fonctionnement dans le domaine de fréquences de rotation hypercritiques permet d'augmenter le rendement global et le rapport de compression du motocompresseur 10.

En variante, le rotor 13 peut être relié à un dispositif mécanique configuré pour entraîner le rotor 13 de sorte que la machine électrique tournante 11 fonctionne en mode génératrice pour produire de la puissance électrique, l'ensemble comprenant ledit dispositif et la machine électrique fonctionnant à une fréquence de rotation hypercritique.

Comme la puissance électrique produite est proportionnelle à la vitesse de rotation du rotor de ladite machine, le rendement de ladite machine est améliorée.

Bien entendu, le dimensionnement du rotor 13 tel que défini précédemment, et de sorte qu'il fonctionne à une fréquence de rotation hypercritique de la ligne de transmission s'applique pour tout système mécanique comprenant un arbre de transmission relié au rotor.

## Revendications

1. Rotor (13) pour machine électrique, le rotor comportant un arbre non traversant destiné à entraîner une ligne de transmission et comprenant deux demi-arbres (19, 20) enserrant une masse magnétique (18) cylindrique formant l'arbre non traversant, la ligne de transmission étant formée par le rotor et un arbre de transmission (14) d'une section de compression (12) relié à l'arbre non traversant, la masse magnétique comprenant au moins deux cellules identiques (23, 24, 25, 26, 27, 28, 29, 30, 31) adjacentes, chaque cellule comportant au moins un élément (32, 33) circulaire réalisée en un matériau, **caractérisé par** un module de Young et une masse volumique, les éléments circulaires comportant chacun une tôle ayant le module de Young, la masse volumique, une épaisseur (L321) et un diamètre prédéterminé (D321), **caractérisé en ce que**
l'épaisseur de l'élément circulaire étant déterminée à partir du diamètre prédéterminé, du module de Young et de la masse volumique du matériau pour minimiser la propagation de méta amortissement dans le rotor sur une plage de fréquence d'excitation de la ligne de transmission comprise entre 0 et 5.5 KHZ en plaçant la plage de fréquences de méta-amortissement de la masse magnétique du rotor au-delà de 5.5kHz de sorte que les modes propres de la ligne de transmission ne soient pas excités par le contrôle de paliers magnétiques maintenant le rotor et l'arbre de transmission (14), l'épaisseur de l'élément circulaire étant déterminée en:
- calculant un coefficient d'amortissement homogénéisé de Rayleigh représentant l'amortissement du rotor en faisant varié la pulsation entre 0 rad/s et 34557 rad/s pour différentes valeurs de l'épaisseur, du diamètre extérieur, du module de Young et de la masse volumique,
- obtenant une courbe (C1) représentant le coefficient d'amortissement homogénéisé de Rayleigh en fonction de la valeur du diamètre et de l'épaisseur, la courbe ayant une zone au-dessus de la courbe et une zone en dessous de la courbe, les couples de valeurs de diamètre et d'épaisseur situées dans la zone au-dessus de la courbe engendrent des méta amortissements dans le rotor pour des fréquences inférieures à 5.5 KHz, et les couples de valeurs de diamètre et d'épaisseur situées dans la zone sous la courbe engendrent dans le rotor des méta amortissements dont les amplitudes ne sont pas susceptibles d'entraîner une instabilité du rotor pour des fréquences supérieures à 5.5 KHz,
- déterminant la valeur de l'épaisseur de l'élément circulaire de sorte que le couple de valeur d'épaisseur (L321) et de diamètre prédéterminée (D321) soit dans la zone sous la courbe (C1),
- la plage de fréquences de rotation de la ligne de transmission étant toutes les fréquences de rotation supérieures ou égales à la première fréquence de résonance de flexion en précession directe de la ligne de transmission et s'étend entre 0 et 500 Hz.

2. Rotor selon la revendication 1, dans lequel chaque cellule (23, 24, 25, 26, 27, 28, 29, 30, 31) comporte au moins deux éléments circulaires.

3. Rotor selon la revendication 2, dans lequel les deux éléments circulaires (32, 33) comprennent un diamètre extérieur (D₃₂, D₃₃) identique ou différent.

4. Rotor selon l'une des revendications 1 à 3, dans lequel les deux éléments circulaires (32, 33) sont en un matériau identique ou chaque élément circulaire est en un matériau différent.

5. Rotor selon l'une des revendications 1 à 4, dans lequel chaque élément circulaire est réalisé en acier magnétique, en cuivre ou en matière plastique.

6. Rotor selon l'une des revendications 1 à 5, comprenant en outre deux disques de court-circuit (21, 22) et des barres conductrices (34) logées dans les éléments circulaires (32, 33) pour former une cage d'écureuil.

7. Machine électrique tournante (11) comprenant le rotor selon l'une des revendications 1 à 6.

8. Machine électrique tournante (11) selon la revendication 7, du type asynchrone à cage d'écureuil.

9. Système mécanique (1) comprenant la machine électrique tournante selon l'une des revendications 7 et 8 et un dispositif mécanique comprenant un arbre de transmission (14), l'arbre de transmission étant relié à l'un des demi-arbres rotoriques (19, 20).

10. Motocompresseur (10) comprenant au moins une section de compression (12) et la machine électrique tournante (11) selon l'une des revendications 7 et 8 entraînant ladite section de compression.

11. Procédé de dimensionnement d'un rotor à arbre non traversant pour machine électrique entraînant une ligne de transmission, le rotor comprenant deux demi-arbres (19, 20) formant l'arbre traversant et enserrant une masse magnétique (18) cylindrique comprenant au moins deux cellules identiques adjacentes, la ligne de transmission étant formée par le rotor et un arbre de transmission (14) d'une section de compression (12) relié à l'arbre non traversant, chaque cellule comportant au moins un élément (32, 33) circulaire réalisée en un matériau **caractérisé par** un module de Young et une masse volumique, les éléments circulaires comportant chacun une tôle ayant le module de Young, la masse volumique, une épaisseur (L321) et un diamètre prédéterminé (D321), **caractérisé en ce que** le procédé comprend un dimensionnement de l'épaisseur de l'élément circulaire à partir du diamètre prédéterminé, du module de Young et de la masse volumique du matériau de manière à minimiser la propagation de méta amortissement dans le rotor (13) sur une plage de fréquences d'excitation de la ligne de transmission comprise entre 0 et 5.5 KHZ en plaçant la plage de fréquences de méta-amortissement de la masse magnétique du rotor au-delà de 5.5kHz de sorte que les modes propres de la ligne de transmission ne pas excités par le contrôle de paliers magnétiques maintenant le rotor et l'arbre de transmission (14), le procédé comprenant :
- un calcule d'un coefficient d'amortissement homogénéisé de Rayleigh représentant l'amortissement du rotor en faisant varié la pulsation entre 0 rad/s et 34557 rad/s pour différentes valeurs de l'épaisseur, du diamètre extérieur, du module de Young et de la masse volumique,
- une obtention d'une courbe (C1) représentant le coefficient d'amortissement homogénéisé de Rayleigh en fonction de la valeur du diamètre et de l'épaisseur, la courbe ayant une zone au-dessus de la courbe et une zone en dessous de la courbe, les couples de valeurs de diamètre et d'épaisseur situées dans la zone au-dessus de la courbe engendrent des méta amortissements dans le rotor pour des fréquences inférieures à 5.5 KHz, et les couples de valeurs de diamètre et d'épaisseur situées dans la zone sous la courbe engendrent dans le rotor des méta amortissements dont les amplitudes ne sont pas susceptibles d'entraîner une instabilité du rotor pour des fréquences supérieures à 5.5 KHz,
- une détermination de la valeur de l'épaisseur inférieure de sorte que le couple de valeur d'épaisseur (L321) et de diamètre prédéterminée (D321) soit dans la zone sous la courbe (C1),
- la plage de fréquence de rotation de la ligne de transmission étant toutes les fréquences de rotation supérieures ou égales à la première fréquence de résonance de flexion en précession directe de la ligne de transmission et s'étend entre 0 et 500 Hz.

12. Procédé selon la revendication 11, dans lequel le dimensionnement de la cellule (23, 24, 25, 26, 27, 28, 29, 30, 31) comportant au moins un élément circulaire (32, 33) est réalisé de manière analytique en mettant en œuvre un modèle de poutre.

## Patentansprüche

1. Rotor (13) für eine elektrische Maschine, wobei der Rotor eine nicht durchgehende Welle aufweist, die zum Antrieb einer Übertragungsleistung bestimmt ist und zwei Halbwellen (19, 20) umfasst, die eine zylindrische magnetische Masse (18) umschließen, die die nicht durchgehende Welle bildet, wobei die Übertragungsleitung vom Rotor und eine Antriebswelle (14) mit einem Verdichtungsabschnitt (12), der mit der nicht durchgehenden Welle verbunden ist, gebildet wird, wobei die magnetische Masse mindestens zwei identische, benachbarte Zellen (23, 24, 25, 26, 27, 28, 29, 30, 31) umfasst, wobei jede Zelle mindestens ein kreisförmiges Element (32, 33) aus einem Material umfasst, das durch ein Young-Modul und eine Dichte gekennzeichnet ist, wobei die kreisförmigen Elemente jeweils ein Blech mit dem Young-Modul, der Dichte, einer Dicke (L321) und einem vorbestimmten Durchmesser (D321) aufweisen, **dadurch gekennzeichnet, dass** die Dicke des kreisförmigen Elements anhand des vorbestimmten Durchmessers, des Young-Moduls und der Dichte des Materials bestimmt wird, um die Ausbreitung der Metadämpfung im Rotor über einen Erregerfrequenzbereich der Übertragungsleitung zwischen 0 und 5,5 kHZ zu minimieren, indem der Metadämpfungsfrequenzbereich der magnetischen Masse des Rotors über 5,5 kHz eingestellt wird, so dass die Eigenmoden der Übertragungsleitung nicht durch die Steuerung der Magnetlager, die den Rotor und die Antriebswelle (14) halten, erregt werden, wobei die Dicke des kreisförmigen Elements bestimmt wird durch:
- Berechnen eines homogenisierten Dämpfungskoeffizienten nach Rayleigh, der die Dämpfung des Rotors darstellt, indem die Pulsation zwischen 0 rad/s und 34557 rad/s für verschiedene Werte der Dicke, des Außendurchmessers, des Young-Moduls und der Dichte variiert wird,
- Erhalten einer Kurve (C1), die den homogenisierten Dämpfungskoeffizienten nach Rayleigh in Abhängigkeit vom Durchmesserwert und der Dicke darstellt, wobei die Kurve einen Bereich oberhalb der Kurve und einen Bereich unterhalb der Kurve aufweist, wobei die Paare aus dem Durchmesserwert und dem Dickewert, die sich im Bereich oberhalb der Kurve befinden, zu Metadämpfungen im Rotor bei Frequenzen unter 5,5 kHz führen, und die Paare aus dem Durchmesserwert und dem Dickenwert, die sich im Bereich unterhalb der Kurve befinden, zu Metadämpfungen im Rotor führen, deren Amplituden bei Frequenzen über 5,5 kHz keine Instabilität des Rotors verursachen können,
- Bestimmen des Werts der Dicke des kreisförmigen Elements, so dass sich das Paar aus dem Dickenwert (L321) und dem vorbestimmtem Durchmesserwert (D321) im Bereich unterhalb der Kurve (C1) befindet,
- wobei der Drehfrequenzbereich der Übertragungsleitung alle Drehfrequenzen umfasst, die größer oder gleich der ersten Biegeresonanzfrequenz in direkter Präzession der Übertragungsleitung ist, und zwischen 0 und 500 Hz liegt.

2. Rotor nach Anspruch 1, wobei jede Zelle (23, 24, 25, 26, 27, 28, 29, 30, 31) mindestens zwei kreisförmige Elemente aufweist.

3. Rotor nach Anspruch 2, wobei die beiden kreisförmigen Elemente (32, 33) einen identischen oder unterschiedlichen Außendurchmesser (D₃₂, D₃₃) umfassen.

4. Rotor nach einem der Ansprüche 1 bis 3, wobei die beiden kreisförmigen Elemente (32, 33) aus einem identischen Material bestehen oder jedes kreisförmige Element aus einem anderen Material besteht.

5. Rotor nach einem der Ansprüche 1 bis 4, wobei jedes kreisförmige Element aus magnetischem Stahl, Kupfer oder Kunststoff hergestellt ist.

6. Rotor nach einem der Ansprüche 1 bis 5, ferner umfassend zwei Kurzschlussscheiben (21, 22) und Stromschienen (34), die in den kreisförmigen Elementen (32, 33) untergebracht sind, um einen Käfigläufer zu bilden.

7. Drehende elektrische Maschine (11), die den Rotor nach einem der Ansprüche 1 bis 6 umfasst.

8. Drehende elektrische Maschine (11) nach Anspruch 7, vom Typ eines asynchronen Motors mit Käfigläufer.

9. Mechanisches System (1), das die drehende elektrische Maschine nach einem der Ansprüche 7 und 8 und eine mechanische Vorrichtung umfasst, die eine Antriebswelle (14) umfasst, wobei die Antriebswelle mit einer der Rotorwellenhälften (19, 20) verbunden ist.

10. Motorkompressor (10), umfassend mindestens einen Verdichtungsabschnitt (12) und die drehende elektrische Maschine (11) nach einem der Ansprüche 7 und 8, die den Verdichtungsabschnitt antreibt.

11. Verfahren zur Dimensionierung eines Rotors mit nicht durchgehender Welle für eine elektrische Maschine, die eine Übertragungslinie antreibt, wobei der Rotor zwei Halbwellen (19, 20) umfasst, die die durchgehende Welle bilden und eine zylindrische magnetische Masse (18) umschließen, die mindestens zwei identische, benachbarte Zellen umfasst, wobei die Übertragungslinie durch den Rotor und eine Übertragungswelle (14) mit einem Verdichtungsabschnitt (12), der mit der nicht durchgehenden Welle verbunden ist, gebildet wird, wobei jede Zelle mindestens ein kreisförmiges Element (32, 33) aus einem Material aufweist, das durch ein Young-Modul und eine Dichte gekennzeichnet ist, wobei die kreisförmigen Elemente jeweils ein Blech mit dem Young-Modul, der Dichte, einer Dicke (L321) und einem vorbestimmten Durchmesser (D321) aufweisen, **dadurch gekennzeichnet, dass** das Verfahren eine Dimensionierung der Dicke des kreisförmigen Elements ausgehend von dem vorbestimmten Durchmesser, dem Young-Modul und der Dichte des Materials umfasst, um die Ausbreitung der Metadämpfung im Rotor (13) über einen Erregerfrequenzbereich der Übertragungsleitung zwischen 0 und 5,5 KHZ zu minimieren, indem der Metadämpfungsfrequenzbereich der magnetischen Masse des Rotors über 5,5 kHz eingestellt wird, so dass die Eigenmoden der Übertragungsleitung nicht durch die Steuerung der Magnetlager, die den Rotor und die Antriebswelle (14) halten, erregt werden, wobei das Verfahren umfasst:
- Berechnen eines homogenisierten Dämpfungskoeffizienten nach Rayleigh, der die Dämpfung des Rotors darstellt, indem die Pulsation zwischen 0 rad/s und 34557 rad/s für verschiedene Werte der Dicke, des Außendurchmessers, des Young-Moduls und der Dichte variiert wird,
- Erhalten einer Kurve (C1), die den homogenisierten Dämpfungskoeffizienten nach Rayleigh in Abhängigkeit vom Durchmesserwert und der Dicke darstellt, wobei die Kurve einen Bereich oberhalb der Kurve und einen Bereich unterhalb der Kurve aufweist, wobei die Paare aus dem Durchmesserwert und dem Dickewert, die sich im Bereich oberhalb der Kurve befinden, zu Metadämpfungen im Rotor bei Frequenzen unter 5,5 kHz führen, und die Paare aus dem Durchmesserwert und dem Dickenwert, die sich im Bereich unterhalb der Kurve befinden, zu Metadämpfungen im Rotor führen, deren Amplituden bei Frequenzen über 5,5 kHz keine Instabilität des Rotors verursachen können,
- Bestimmen des Wertes der unteren Dicke, so dass das Paar aus dem Dickenwert (L321) und dem vorbestimmten Durchmesserwert (D321) im Bereich unterhalb der Kurve (C1) liegt,
- wobei der Drehfrequenzbereich der Übertragungsleitung alle Drehfrequenzen umfasst, die größer oder gleich der ersten Biegeresonanzfrequenz in direkter Präzession der Übertragungsleitung ist, und zwischen 0 und 500 Hz liegt.

12. Verfahren nach Anspruch 11, wobei die Dimensionierung der Zelle (23, 24, 25, 26, 27, 28, 29, 30, 31), die mindestens ein kreisförmiges Element (32, 33) aufweist, durch die Anwendung eines Balkenmodells analytisch durchgeführt wird.

## Claims

1. Rotor (13) for an electric machine, the rotor comprising a non-through shaft intended to drive a transmission line and comprising two half-shafts (19, 20) enclosing a cylindrical magnetic mass (18) forming the non-through shaft, the transmission line being formed by the rotor and a transmission shaft (14) of a compression section (12) connected to the non-through shaft, the magnetic mass comprising at least two adjacent identical cells (23, 24, 25, 26, 27, 28, 29, 30, 31), each cell comprising at least one circular element (32, 33) made of a material, **characterised by** a Young's modulus and a density, the circular elements each comprising a sheet having the Young's modulus, the density, a thickness (L321) and a predetermined diameter (D321), **characterised in that** the thickness of the circular element is determined on the basis of the predetermined diameter, the Young's modulus and the density of the material in order to minimise meta-damping propagation in the rotor over a range of excitation frequencies of the transmission line between 0 and 5.5 KHZ by placing the range of meta-damping frequencies of the magnetic mass of the rotor above 5.5kHz such that the natural modes of the transmission line are not excited by the control of magnetic bearings holding the rotor and the transmission shaft (14), the thickness of the circular element being determined by:
- computing a homogenised Rayleigh damping coefficient representing the damping of the rotor by varying the pulsation between 0 rad/s and 34557 rad/s for different thickness, external diameter, Young's modulus and density values,
- obtaining a curve (C1) representing the homogenised Rayleigh damping coefficient as a function of the value of the diameter and of the thickness, the curve having an area above the curve and an area under the curve, the pairs of diameter and thickness values located in the area above the curve generate meta-damping in the rotor for frequencies lower than 5.5 kHz, and the pairs of diameter and thickness values located in the area under the curve generate meta-damping in the rotor the amplitudes of which are not likely to cause rotor instability for frequencies higher than 5.5 kHz,
- determining the value of the thickness of the circular element so that the pair of predetermined thickness (L321) and diameter (D321) values is in the area under the curve (C1),
- the range of rotational frequencies of the transmission line all being rotational frequencies higher than or equal to the first direct precession bending resonance frequency of the transmission line and ranges between 0 and 500 Hz.

2. Rotor according claim 1, wherein each cell (23, 24, 25, 26, 27, 28, 29, 30, 31) comprises at least two circular elements.

3. Rotor according to claim 2, wherein the two circular elements (32, 33) comprise an identical or different external diameter (D₃₂, D₃₃).

4. Rotor according to one of claims 1 to 3, wherein the two circular elements (32, 33) are made of an identical material or each circular element is made of a different material.

5. Rotor according to one of claims 1 to 4, wherein each circular element is made of magnetic steel, copper or plastic.

6. Rotor according to one of claims 1 to 5, further comprising two short-circuit discs (21, 22) and conductive bars (34) housed in the circular elements (32, 33) to form a cage winding.

7. Rotary electric machine (11) comprising the rotor according to one of claims 1 to 6.

8. Rotary electric machine (11) according to claim 7, of the asynchronous cage winding type.

9. Mechanical system (1) comprising the rotary electric machine according to one of claims 7 and 8 and a mechanical device comprising a transmission shaft (14), the transmission shaft being connected to one of the rotor half-shafts (19, 20).

10. Motor-compressor set (10) comprising at least one compression section (12) and the rotary electric machine (11) according to one of claims 7 and 8 driving said compression section.

11. Method for sizing rotor with a non-through shaft for an electric machine driving a transmission line, the rotor comprising two half-shafts (19, 20) forming the through shaft and enclosing a cylindrical magnetic mass (18) comprising at least two adjacent identical cells, the transmission line being formed by the rotor and a transmission shaft (14) of a compression section (12) connected to the non-through shaft, each cell comprising at least one circular element (32, 33) made of a material **characterised by** a Young's modulus and a density, the circular elements each comprising a sheet having the Young's modulus, the density, a thickness (L321) and a predetermined diameter (D321), **characterised in that** the method comprises sizing the thickness of the circular element on the basis of the predetermined diameter, the Young's modulus and the density of the material so as to minimise meta-damping propagation in the rotor (13) over a range of excitation frequencies of the transmission line between 0 and 5.5 KHZ by placing the range of meta-damping frequencies of the magnetic mass of the rotor above 5.5kHz such that the natural modes of the transmission line are not excited by the control of magnetic bearings holding the rotor and the transmission shaft (14), the method comprising:
- computing a homogenised Rayleigh damping coefficient representing the damping of the rotor by varying the pulsation between 0 rad/s and 34557 rad/s for different thickness, external diameter, Young's modulus and density values,
- obtaining a curve (C1) representing the homogenised Rayleigh damping coefficient as a function of the value of the diameter and of the thickness, the curve having an area above the curve and an area under the curve, the pairs of diameter and thickness values located in the area above the curve generate meta-damping in the rotor for frequencies lower than 5.5 kHz, and the pairs of diameter and thickness values located in the area under the curve generate meta-damping in the rotor the amplitudes of which are not likely to cause rotor instability for frequencies higher than 5.5 kHz,
- determining the lower value of the thickness so that the pair of predetermined thickness (L321) and diameter (D321) values is in the area under the curve (C1),
- the range of rotational frequency of the transmission line all being rotational frequencies higher than or equal to the first direct precession bending resonance frequency of the transmission line and ranges between 0 and 500 Hz.

12. Method according to claim 11, wherein sizing the cell (23, 24, 25, 26, 27, 28, 29, 30, 31) comprising at least one circular element (32, 33) is carried out analytically by implementing a beam model.
